# EUROPEAN PATENT SPECIFICATION

(11) **EP 1 494 540 B1**
(45) Date of publication and mention of the grant of the patent: **04.04.2012**
(21) Application number: 03720693.5
(22) Date of filing: 11.04.2003
(51) Int. Cl.: A23C 20/02

(54) **CHEESE SUBSTITUTES**
KÄSE-ERSATZPRODUKTE
SUBSTITUTS DE FROMAGE

(30) Priority: 16.04.2002 GB 0208683
(43) Date of publication of application: 12.01.2005
(73) Proprietor: Morehands Limited, Erith, Kent DA8 2JA (GB)
(72) Inventor: MUSSAWIR-KEY, Frederick Wade, Kent DA15 7HL (GB)
(74) Representative: Womsley, Nicholas
(86) International application number: PCT/GB2003/001566
(87) International publication number: WO 2003/088754

(56) References cited:
- FR-A- 2 203 592
- US-A- 3 689 290
- US-A- 3 857 977
- PATENT ABSTRACTS OF JAPAN vol. 015, no. 221 (C-0838), 6 June 1991 (1991-06-06) & JP 03 067544 A (SHINWA:KK), 22 March 1991 (1991-03-22)
- PATENT ABSTRACTS OF JAPAN vol. 008, no. 168 (C-236), 3 August 1984 (1984-08-03) & JP 59 066838 A (YUKIJIRUSHI NIYUUGIYOU KK), 16 April 1984 (1984-04-16)
- DATABASE WPI Section Ch, Week 198421 Derwent Publications Ltd., London, GB; Class D13, AN 1984-131055 XP002250625 & JP 59 066838 A (SNOW BRAND MILK PROD CO LTD), 16 April 1984 (1984-04-16)
- DATABASE WPI Section Ch, Week 198417 Derwent Publications Ltd., London, GB; Class D13, AN 1984-104764 XP002250626 & JP 59 048047 A (SEKIYA Y), 19 March 1984 (1984-03-19)

## Description

The present invention relates to cheese substitutes and more particularly to substitutes for parmesan cheese.

Parmesan cheese is a mature and hard full fat cheese which is traditionally made from dairy milk and formed in vats using rennet taken from the stomachs of slaughtered dairy animals and in particular calves. The rennet is extracted from the slaughtered animal. The process of forming parmesan cheese also involves procedures to create the characteristic parmesan cheese smell and taste.

Most parmesan cheese is grated and traditionally used to season cooked pasta dishes. Thus, its taste and effect are more important than its specific composition. Parmesan cheese is normally transported in relatively large wheels or wedges which are usually reduced into a wide range of particle sizes from shavings to fine powder.

Parmesan cheese presents a problem to a number of potential users. To vegans for example it is unacceptable as it is a dairy product, to vegetarians it is unacceptable due to the rennet being derived as a by-product of the slaughter of calves and to people who have allergies and intolerances to dairy products or mature cheese it can cause problems. Also, because parmesan cheese is a milk product, some religious beliefs, such as those of the Hebraic/Jewish faith, prevent or at least discourage consumption at the same time of both dairy and meat products.

US Patent 3689290 (Blackstock) relates to a dry, particulate food product formed by adding liquid fat to a dry, bland particulate carrier and a flavouring agent and then coating the resultant particulate with a dry powdered coating agent. The procedure requires the fat to be liquid when mixed with the dry carrier to produce particulates having an outer layer of fat on the surface of the substrate. This outer layer of fat can cause the particles to stick together and so an outer dry powder coating is added to prevent the particulates from sticking together. The process in Blackstock is necessarily a multi-step and thus relatively complex one. Moreover, the resultant product has a multi-layered construction which can impair its organoleptic characteristics.

There is therefore a desire to provide an acceptable parmesan cheese substitute.

In accordance with the present invention there is provided a cheese substitute comprising by weight, a blend of 60-95% bland edible particulate, 1-25% softened vegetable fat component, 1-15% salt component, and parmesan flavouring.

Preferably, the bland edible particulate comprises protein, such as a soya product. Alternatively or in addition, the bland edible particulate may comprise one or more of seed, bean, pulse, pea and lentil product.

Also in accordance with the present invention there is provided a method of producing a cheese substitute comprising softening a volume of fat component, such as fully hydrogenated or partially hydrogenated vegetable fat, preferably by warming the fat component, and blending that softened vegetable fat component with a bland edible particulate, such as flour, and salt along with parmesan flavouring to form a composition comprising by weight 60-95% edible particulate, 1-25% vegetable fat component, 1-15% salt component and parmesan flavouring to a desired proportion, desirably using a mechanised blender, until a crumbly product is formed by the coagulation of the vegetable fat component with the other ingredients. Preferably, bland edible particulate comprises a soya product which as a flour comprises about 70% by weight of the cheese substitute, with the vegetable fat component comprising about 17% by weight, and the salt component about 12% by weight. The parmesan flavouring comprises preferably about 0.5% by weight.

Preferably, the soya product comprises a soya bean or soya flour derivative. Typically, the soya product or edible particulate comprises a soya flour which is a full fat and pre-cooked variety prior to incorporation in accordance with the method and substitute cheese described above.

Preferably, the vegetable fat component comprises a fully hydrogenated or partially hydrogenated vegetable oil, such as "Vegetable Shortening". Alternatively, the vegetable fat component is a palm oil or other suitable vegetable fat based product.

Preferably, the salt component comprises a natural salt or a processed salt substitute. Furthermore, the salt component will have a grain size that has limited intrusive effect in the cheese substitute texture.

Preferably, the parmesan flavouring constitutes 0.1-1% by weight of the cheese substitute. Typically, one or more of colourant, preservative, regulator, thickener, texturant and/or other additives is added for taste and/or texture.

Typically, the crumbled cheese substitute will comprise particles in the range up to 3mm in dimension whereby to be generally consistent with that normally acceptable as gratings for food seasoning with parmesan cheese.

Preferred embodiments of the present invention will now be described by way of example only.

A cheese substitute to imitate grated parmesan cheese must provide the same smell, colour, flavour, appearance and texture to allow acceptable seasoning by a user in accordance with their usual practice. Thus, in accordance with the present invention a protein or other bland edible particulate substance is combined with fat and salt along with a flavouring to approximate the taste and smell of parmesan. The preferred choice of protein or edible particulate source is a full fat pre-cooked soya flour. The fat chosen is one suitable to act as the binding as well as mixing matrix for the cheese substitute. Thus, a vegetable based fat such as partially or fully hydrogenated vegetable oil commonly known as "Vegetable Shortening" is used. A fine table salt, sodium chloride, is used in order to allow ready and discrete combination with the other constituents of the cheese substitute. In short, the protein or particulate source, fat and salt act as a matrix in which a vegetarian parmesan flavouring is held. Such vegetarian parmesan flavouring tends to be an essence, possibly concentrated, which approximates the smell and taste of parmesan cheese but requires a different level of usage for seasoning in comparison with conventional parmesan cheese supplies. The parmesan cheese flavouring may be naturally or synthetically produced. An example of a suitable parmesan cheese flavouring is that produced by Aromco Ltd., Ware, Herts., under their reference "Cheese Parmesan Flavouring OF3826". This is a flavouring having a vegetable oil solvent base with the active flavouring distributed in that base. Such a vegetable oil solvent base helps with appropriate dispersion of the flavouring in the cheese substitute.

The matrix of the protein or bland edible particulate substance and fat along with salt essentially bulks up the proprietary vegetarian parmesan flavouring to approximate a consistency for seasoning typical of conventionally supplied and produced grated parmesan cheese. The edible particulate in itself is of bland taste. In such circumstances, the present cheese substitute can be used as conventional gratings, powder or shavings without special consideration. The present cheese substitute and conventionally produced parmesan cheese are substantially interchangeable. However, the present cheese substitute is not a dairy product and can be used by vegetarians, vegans and individuals susceptible to allergies with dairy products, along with fulfilling certain religious customs.

In order to form the present cheese substitute, the vegetable fat is softened to allow ready combination with the protein or particulate source, that is to say full fat pre-cooked soya flour and fine grain table salt along with the proprietary parmesan flavouring. The mixture is mechanically combined using a blender. As the vegetable based fat coalesces from a softened form a crumbly mass is rendered reminiscent of dairy or conventionally produced grated parmesan cheese. The crumbs of cheese substitute are up to 3 mm across and so consistent with typical granular or grated parmesan cheese for seasoning purposes.

If necessary the granulated substitute cheese may be compressed into blocks or rounds typical of conventional parmesan cheese presentation. These blocks or rounds may be cut into wedges in a conventional manner. Water may be added in order to facilitate binding of the crumbs of substitute cheese. The water content may be up to 20% by weight of the substitute cheese. The salt component of the cheese substitute will sterilise the water and possibly aid caking of the substitute cheese crumbs to form a block or round. Typically, the crumbs of substitute cheese with water will be loaded into a press mould of the desired shape. The substitute cheese mixture will be pressed and squeezed into a caked association with release of some liquid/water. Once formed as a block or round, the substitute cheese may be sliced as required.

The present cheese substitute is a parmesan cheese replacement which is non-dairy. Thus, as indicated previously although resembling parmesan cheese it is more acceptable to vegans, vegetarians and persons allergic to dairy products. In addition, religious regulations and conventions with regard to storage and presentation of dairy products with meat products are not applicable to the present cheese substitute.

As indicated above the protein or particulate, fat and salt components, along with any water added where required, essentially act as a matrix upon which the parmesan flavouring is presented in order to provide an allusion to the taste and odour of conventional parmesan cheese. The protein or particulate, fat and salt components essentially approach the consistency and texture of conventional parmesan cheese in its crumbled or grated form. However, other additives may be added to further refine taste and/or texture and to extend the shelf life of the product.

The specific constituent proportions of the protein or particulate, fat and salt will be chosen dependent upon a number of factors including customer expectation, probable storage conditions In terms of time, temperature and humidity along with acceptable cost. A typical practical composition would be in the order of 69-71% by weight protein or edible particulate in the form of soya flour, 16-18% by weight of hydrogenated vegetable fat along with 11-13% by weight fine grade salt. The mixing process between the matrix (soya flour/fat/salt) and the parmesan flavouring should be sufficient to achieve at least an acceptable distribution of the parmesan flavouring throughout the cheese substitute. A typical weight percentage of parmesan cheese flavouring will be in the order of 0.1-1% weight. Thus, a relatively intensive and/or long term blending process must be performed in order to adequately distribute the parmesan flavouring throughout the substitute cheese. Typically, a bladed mechanical blender will be used in order to shear the constituent elements of the substitute cheese in a blending/mixing process. In any event, there may be a balance between the proportion of parmesan cheese flavouring added to meet customer expectation against the level of mixing. The flavouring may be a relatively expensive material component but mixing will affect production time so both will be factors in determining cost of the cheese substitute.

As indicated above, the fat component will be softened prior to mixing with the other components of the substitute cheese. Typically, the fat is heated to soften it. As the fat cools it congeals or coagulates to bind the substitute cheese and form crumbled granules of acceptable size for parmesan cheese type seasoning processes.

It will be appreciated in addition to providing balanced flavouring in the substitute cheese the salt constituent may act as a preservative to facilitate longer storage and potentially as a temperature regulator such that further heat softening of the fat is resisted in order to maintain the crumbled granular agglomerations of substitute cheese in accordance with the present invention.

It is important that the matrix comprising the protein or edible particulate component, fat and salt components is essentially neutral in terms of taste in order that it does not detract from the proprietary parmesan flavouring distributed throughout the substitute cheese. Full fat pre-cooked soya flour has no strong flavour. Thus, when the present substitute cheese is sprinkled, in a manner consistent with conventional parmesan cheese over cooked pasta with or without a strong sauce, there is no readily noticeable or appreciable difference from conventionally produced spray dried parmesan cheese commercially sold as grated.

The present cheese substitute provides a bland and edible particulate product which approximates that of parmesan cheese for seasoning purposes.

Various modifications may be made. For example the bland edible particulate may comprise one or more of seed, bean, pulse, pea and lentil product, instead of or in addition to soya product. The soya product may be in the form of whole or dehulled soya beans. The vegetable fat component may comprise palm oil or any other suitable vegetable oil. The salt component may be added as a solution, such as saline solution. The solution may comprise in the order of one part salt to ten parts water, by weight.

## Claims

1. A cheese substitute comprising a blend of by weight, 60-95% bland edible particulate, 1-25% softened vegetable fat component and 1-15% salt component and parmesan flavouring.

2. A cheese substitute as claimed in claim 1, in which the bland edible particulate comprises protein.

3. A cheese substitute as claimed in claim 1 or claim 2, in which the bland edible particulate comprises a soya product.

4. A cheese substitute as claimed in any preceding claim, in which the bland edible particulate comprises one or more of seed, bean, pulse, pea and lentil product.

5. A cheese substitute as claimed in claim 3, in which the soya product comprises about 70%, the vegetable fat component about 17%, the salt component about 12% and the parmesan flavouring about 0.5%, by weight of the cheese substitute.

6. A cheese substitute as claimed in any of claims 3 to 5, in which the soya product is in the form of a flour.

7. A cheese substitute as claimed in any of claims 3 to 6, in which the soya product comprises a soya bean or soya flour derivative.

8. A cheese substitute as claimed in claim 6, in which the soya product component is a full fat, pre-cooked soya flour.

9. A cheese substitute as claimed in any preceding claim, in which the vegetable fat component comprises a fully hydrogenated or partially hydrogenated vegetable oil,

10. A cheese substitute as claimed in claim 9, in which the vegetable fat comprises vegetable shortening.

11. A cheese substitute as claimed in any preceding claim, in which the vegetable fat component comprises palm oil.

12. A cheese substitute as claimed in any preceding claim, in which the salt component comprises a natural salt and/or a processed salt substitute.

13. A cheese substitute as claimed in any preceding claim, in which the salt component has a grain size that has limited intrusive effect in the cheese substitute texture.

14. A cheese substitute as claimed in any preceding claim, in which the parmesan flavouring constitutes 0.1-1% by weight of the cheese substitute.

15. A cheese substitute as claimed in any preceding claim, in which the cheese substitute further comprises one or more of colourant, preservative, thickener, texturant, regulator and other additives.

16. A cheese substitute as claimed in any preceding claim, in which the cheese substitute comprises particles in the range up to 3mm in dimension.

17. A method for producing a cheese substitute comprising softening a volume of vegetable fat component and blending that softened, vegetable fat component with bland edible particulate, a salt component and parmesan flavouring to a composition comprising by weight 60-95% bland edible particulate, 1-25% vegetable fat component, 1-15% salt component and parmesan flavouring to a desired proportion until a crumbly product is formed by the coagulation of the vegetable fat component with the other ingredients.

18. A method as claimed in claim 17, in which the vegetable fat component is warmed to facilitate production.

19. A method as claimed in any of claims 17 to 19, in which the vegetable fat component, the bland edible particulate, the salt component and the parmesan flavouring are as defined in any of claims 1 to 16.

## Patentansprüche

1. Käse-Ersatzprodukt, welches eine Mischung nach Gewichtsanteilen aus 60-95 % mildem essbarem Partikel-Material, 1-25 % weichgemachtem Pflanzenfett-Bestandteil und 1-15 % Salz-Bestandteil sowie Parmesan-Geschmacksstoff umfasst.

2. Käse-Ersatzprodukt nach Anspruch 1, bei welchem das milde essbare Partikel-Material Protein umfasst.

3. Käse-Ersatzprodukt nach Anspruch 1 oder 2, bei welchem das milde essbare Partikel-Material ein Soja-Produkt umfasst.

4. Käse-Ersatzprodukt nach einem der vorhergehenden Ansprüche, bei welchem das milde essbare Partikel-Material ein Samen-, Bohnen-, Hülsenfrucht-, Erbsen- oder Linsen-Produkt oder eine Kombination davon umfasst.

5. Käse-Ersatzprodukt nach Anspruch 3, bei welchem das Soja-Produkt etwa 70 %, der Pflanzenfett-Bestandteil etwa 17 %, der Salz-Bestandteil etwa 12 % und der Parmesan-Geschmacksstoff etwa 0,5 % des Käse-Ersatzproduktes nach Gewichtsanteilen darstellen.

6. Käse-Ersatzprodukt nach einem der Ansprüche 3 bis 5, bei welchem das Soja-Produkt in Form eines Mehles vorliegt.

7. Käse-Ersatzprodukt nach einem der Ansprüche 3 bis 6, bei welchem das Soja-Produkt ein Sojabohnen- oder Sojamehl-Derivat umfasst.

8. Käse-Ersatzprodukt nach Anspruch 6, bei welchem der Sojaprodukt-Bestandteil ein vorgekochtes Vollfett-Sojamehl ist.

9. Käse-Ersatzprodukt nach einem der vorhergehenden Ansprüche, bei welchem der Pflanzenfett-Bestandteil ein vollständig hydriertes oder teilweise hydriertes Pflanzenöl umfasst.

10. Käse-Ersatzprodukt nach Anspruch 9, bei welchem das Pflanzenfett ein Pflanzenfett-Shortening umfasst.

11. Käse-Ersatzprodukt nach einem der vorhergehenden Ansprüche, bei welchem der Pflanzenfett-Bestandteil Palmöl umfasst.

12. Käse-Ersatzprodukt nach einem der vorhergehenden Ansprüche, bei welchem der Salz-Bestandteil ein natürliches Salz und/oder ein verarbeitetes Salz-Ersatzprodukt umfasst.

13. Käse-Ersatzprodukt nach einem der vorhergehenden Ansprüche, bei welchem der Salz-Bestandteil eine Korngrösse hat, die einen nur begrenzt aufrdinglichen Effekt auf die Textur des Käse-Ersatzproduktes hat.

14. Käse-Ersatzprodukt nach einem der vorhergehenden Ansprüche, bei welchem der Parmesan-Geschmacksstoff 0,1-1 Gew.% des Käse-Ersatzproduktes darstellt.

15. Käse-Ersatzprodukt nach einem der vorhergehenden Ansprüche, bei welchem das Käse-Ersatzprodukt ausserdem ein Färbungsmittel, ein Konservierungsmittel, ein Verdickungsmittel, einen Texturbildner, oder einen Regulator sowie weitere Additive oder eine Kombination davon umfasst.

16. Käse-Ersatzprodukt nach einem der vorhergehenden Ansprüche, bei welchem das Käse-Ersatzprodukt Partikel in einem Grössenbereich von bis zu 3 mm umfasst.

17. Verfahren zum Herstellen eines Käse-Ersatzproduktes, bei welchem ein Volumen eines Pflanzenfett-Bestandteils weichgemacht wird und der weichgemachte Pflanzenfett-Bestandteil mit einem milden essbaren Partikel-Material, einem Salz-Bestandteil und einem Parmesan-Geschmacksstoff zu einer Zusammensetzung, welche 60-95 % mildes essbares Partikel-Material, 1-25 Pflanzenfett-Bestandteil und 1-15 % Salz-Bestandteil sowie Parmesan-Geschmacksstoff nach Gewichtsanteilen umfasst, zu einem gewünschten Anteil gemischt wird, bis durch die Koagulation des Pflanzenfett-Bestandteils mit den anderen zutaten ein krümeliges Produkt gebildet wird.

18. Verfahren nach Anspruch 17, bei welchem der Pflanzenfett-Bestandteil erwärmt wird, um die Herstellung zu erleichtern.

19. Verfahren nach einem der Ansprüche 17 bis 19, bei welchem der Pflanzenfett-Bestandteil, das milde essbare Partikel-Material, der Salz-Bestandteil und der Parmasan-Geschmacksstoff diejenigen sind, welche in einem der Ansprüche 1 bis 16 definiert sind.

## Revendications

1. Substitut de fromage comprenant un mélange, en poids, de 60 à 95 % en poids de matière particulaire comestible fade, de 1 à 25 % d'un composant de graisse végétale ramolli et de 1 à 15 % de composant de sel et de l'arôme de parmesan.

2. Substitut de fromage selon la revendication 1, dans lequel la matière particulaire comestible fade comprend des protéines.

3. Substitut de fromage selon la revendication 1 ou la revendication 2, dans lequel la matière particulaire comestible fade comprend un produit de soja.

4. Substitut de fromage selon l'une quelconque des revendications précédentes, dans lequel la matière particulaire comestible fade comprend un ou plusieurs de produits de graines, de fèves, de légumineuse, de pois et de lentilles,

5. Substitut de fromage selon la revendication 3, dans lequel le produit de soja constitue environ 70 %, le composant de graisse végétale environ 17 %, le composant de sel environ 12 % et l'arôme de parmesan environ 0,5 %, en poids du substitut de fromage.

6. Substitut de fromage selon l'une quelconque des revendications 3 à 5, dans lequel le produit de soja se présente sous la forme d'une farine.

7. Substitut de fromage selon l'une quelconque des revendications 3 à 6, dans lequel le produit de soja comprend une fève de soja ou un dérivé de farine de soja.

8. Substitut de fromage selon la revendication 6, dans lequel le composant de produit de soja est une farine de soja non dégraissée et précuite.

9. Substitut de fromage selon l'une quelconque des revendications précédentes, dans lequel le composant de graisse végétale comprend une huile végétale totalement hydrogénée ou partiellement hydrogénée.

10. Substitut de fromage selon la revendication 9, dans lequel la graisse végétale comprend une graisse alimentaire végétale.

11. Substitut de fromage selon l'une quelconque des revendications précédentes, dans lequel le composant de graisse végétale comprend de l'huile de palme.

12. Substitut de fromage selon l'une quelconque des revendications précédentes, dans lequel le composant de sel comprend un sel naturel et/ou un substitut de sel traité.

13. Substitut de fromage selon l'une quelconque des revendications précédentes, dans lequel le composant de sel a une taille de grain qui a un effet intrusif limité dans la texture du substitut de fromage.

14. Substitut de fromage selon l'une quelconque des revendications précédentes, dans lequel l'arôme de parmesan constitue de 0,1 à 1 % en poids du substitut de fromage.

15. Substitut de fromage selon l'une quelconque des revendications précédentes, dans lequel le substitut de fromage comprend en outre un ou plusieurs d'un colorant, un conservateur, un épaississant, un texturant, un régulateur et d'autres additifs.

16. Substitut de fromage selon l'une quelconque des revendications précédentes, dans lequel le substitut de fromage comprend des particules pouvant atteindre 3 mm de dimension.

17. Procédé pour produire un substitut de fromage comprenant le ramollissement d'un volume de composant de graisse végétale et le mélange de ce composant de graisse végétale ramolli avec une matière particulaire comestible fade, un composant de sel et un arôme de parmesan avec une composition comprenant, en poids, de 60 à 95 % de matière particulaire comestible fade, de 1 à 25 % de composant de graisse végétale, de 1 à 15 % de composant de sel et de l'arôme de parmesan à une proportion souhaitée jusqu'à ce qu'un produit friable soit formé par la coagulation du composant de graisse végétale avec les autres ingrédients.

18. Procédé selon la revendication 17, dans lequel le composant de graisse végétale est réchauffé pour faciliter la production.

19. Procédé selon l'une quelconque des revendications 17 à 19, dans lequel le composant de graisse végétale, la matière particulaire comestible fade, le composant de sel et l'arôme de parmesan sont tels que définis dans l'une quelconque des revendications 1 à 16.
